(19) Europäisches Patentamt
European Patent Office
Office européen des brevets

(11) **EP 3 588 045 B1**

(12) **EUROPÄISCHE PATENTSCHRIFT**

(45) Veröffentlichungstag und Bekanntmachung des Hinweises auf die Patenterteilung:
**19.05.2021 Patentblatt 2021/20**

(51) Int Cl.:
*G01M 1/24* *(2006.01)*  *F01D 5/02* *(2006.01)*

(21) Anmeldenummer: **19181158.7**

(22) Anmeldetag: **19.06.2019**

(54) **VERFAHREN ZUR BESTIMMUNG EINER UNWUCHT EINES WELLENELASTISCHEN ROTORS ANHAND DER AUSBIEGUNG**

METHOD FOR DETERMINING AN UNBALANCE OF A SHAFT-ELASTIC ROTOR WITH REFERENCE TO THE OUTWARD DEFLECTION

PROCÉDÉ DE DÉTERMINATION D'UN DÉSÉQUILIBRE D'UN ROTOR ÉLASTIQUE D'ARBRE EN CE QUI CONCERNE LA FLEXION EXTÉRIEURE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **26.06.2018 DE 102018115363**

(43) Veröffentlichungstag der Anmeldung:
**01.01.2020 Patentblatt 2020/01**

(73) Patentinhaber: **Schenck RoTec GmbH**
**64293 Darmstadt (DE)**

(72) Erfinder:
• **Wanke, Thomas**
**64823 Groß-Umstadt (DE)**

• **Hartnagel, Matthias**
**64625 Bensheim (DE)**

(74) Vertreter: **Meyer, Niels Thorben**
**Haarpatent**
**Patentanwälte Krämer Meyer**
**Goethestraße 2**
**61231 Bad Nauheim (DE)**

(56) Entgegenhaltungen:
DE-A1-102010 063 812    DE-C2- 3 044 440
US-A- 5 724 271

# Beschreibung

Die Erfindung betrifft ein Verfahren zur Bestimmung einer auszugleichenden, äquivalenten modalen Unwucht für die erste Biegeeigenform eines wellenelastischen Rotors.

Beim niedertourigen Auswuchten steifer Rotoren einfacher zylindrischer Formen werden die Resultierenden aller Einzelunwuchten meist in der linken und der rechten Lagerebene gemessen und gegebenenfalls in zwei Ebenen kompensiert. Damit läuft ein starrer Rotor frei von unwuchterzeugten Lagerkräften um. Da die Massenunsymmetrien im allgemeinen über die ganze Länge eines Rotors verteilt sind, bleiben im Rotor jedoch innere Biegemomente infolge der von den einzelnen Unwuchten erzeugten Fliehkräfte zurück. Bei elastischen Rotoren können diese mit dem Quadrat der Drehzahl ansteigenden Kräfte zu unzulässig großen Verformungen führen, die ihrerseits wieder Unwuchtwirkungen auslösen.

Theoretisch besitzt ein Rotor unendlich viele kritische Drehzahlen. Um das Schwingungsverhalten bei einer bestimmten Drehzahl zu beurteilen, werden nur diejenigen kritischen Drehzahlen berücksichtigt, deren Durchbiegungsformen stören. In der Praxis genügt es meist, eine kritische Drehzahl zu berücksichtigen, die einen Rotor zur Wellenelastizität anregt. Ein einfacher walzenförmiger Rotor wird sich deshalb in der Nähe der ersten kritischen Drehzahl v-förmig, in der Nähe der zweiten s-förmig und in der Nähe der dritten w- förmig durchbiegen. Die diesen kritischen Drehzahlen zugeordneten Durchbiegungsformen werden auch Eigenformen des Rotors genannt, die zugeordneten kritischen Drehzahlen auch Eigenformdrehzahlen.

DE 10 2010 063 812 A1 offenbart ein Verfahren zur Wuchtung einer über eine Anzahl von Lagern gelagerten Welle für eine rotierende Maschine, insbesondere für einen Turbolader mithilfe eines rotordynamischen Modells. Bei Rotation der Welle wird an zumindest einer Messstelle die Auslenkung der Welle in radialer Richtung gemessen, wobei die Welle mit einer oder mehreren Drehzahlen in zumindest einem Drehzahlbereich rotiert wird, in dem die erste oder eine höhere Biegemode einer Biegeschwingung der Welle auftritt, und für diese Biegemode der oder die Unwuchtparameter sowie der oder die Ausgleichsparameter zum Ausgleich der Unwucht ermittelt werden. Anschließend wird die Welle im eingebauten Zustand basierend auf den Messwerten gewuchtet.

US 5 724 271 A betrifft ein Verfahren zum Auswuchten eines Rotors einer rotierenden Maschine, wie z.B. einer Dampfturbinen-Generator-Einheit. Eine zeitabhängige Gleichung für die Rotorschwingung wird auf der Grundlage eines rotordynamischen Computermodells formuliert, das aus einer Finite-Elemente-Analyse der Rotorschwingung der Maschine aufgrund der durch das Hinzufügen von Unwuchtgewichten verursachten Zentrifugalkräfte abgeleitet wurde.

Aus DE 40 19 721 A1 ist ein Auswuchtverfahren für einen elastischen Rotor bekannt, der nahe oder bei kritischen Drehzahlen betrieben wird, mit einem Ausgleich in drei oder mehr Ausgleichsebenen unter Heranziehung von Kombinationen von allgemeinen Unwuchtverteilungen des Rotors und vorbestimmten Eigenformen, ohne den Rotor tatsächlich bei kritischen Drehzahlen auszuwuchten. Es werden in einem Unwuchtmesslauf mit Langsamlaufdrehzahl in üblicher Weise Korrekturen bestimmt, die in zwei Ausgleichsebenen des Rotors vorgenommen werden. Zusätzlich wird eine dritte Korrektur am Rotor vorgenommen, die proportional zur ersten und zweiten Korrektur und der Unwucht/Modenform-Kombination ist. Nach einem weiteren Unwuchtmesslauf mit Langsamlaufdrehzahl, der im Hinblick auf die dritte Korrektur als Testgewichtslauf dient, werden dann nochmals Korrekturen für die erste und zweite Ausgleichsebene bestimmt und zum endgültigen Auswuchten des Rotors in diesen vorgenommen.

Ein ähnliches Verfahren, bei dem ebenfalls bei Langsamlauf, d. h. bei einer Drehzahl, die weit unter der Betriebsdrehzahl liegt, ausgewuchtet wird, ist DE 24 07 705 zu entnehmen. Hierbei werden Verhältnisse des Betriebs bei Betriebsdrehzahl simuliert.

In dem Fachbuch von W. Kellenberger, "Elastisches Wuchten", Berlin 1987, Seiten 317 bis 325, wird ein rechnergestütztes Einflusskoeffizientenverfahren mit Testgewichten beschrieben, bei dem sowohl der Starrkörperausgleich als auch die wellenelastische Durchbiegung mit gemeinsam berechneten Ausgleichsmassen beseitigt bzw. reduziert wird. Dazu werden neben einem Urunwuchtmesslauf noch mindestens so viele Unwuchtmessläufe mit Testgewichten erforderlich, wie Ausgleichsebenen vorgesehen sind. Bei der Berücksichtigung der ersten kritischen Drehzahl wären demnach mindestens vier Unwuchtmessläufe notwendig. Da nach diesem Verfahren die bei den Messläufen mit Testgewichten gewonnenen Einflusskoeffizienten im Rechner gespeichert sind, können dann nachfolgende gleichartige Rotoren im günstigsten Fall mit nur einem Unwuchtmesslauf ausgewuchtet werden. In jedem Fall sind aber beim erstmaligen Auswuchten von Rotoren diese mit Testgewichten zu bestücken und entsprechend der Anzahl der zu berücksichtigenden Ausgleichsebenen Testgewichtsläufe durchzuführen.

DE 30 44 440 C2 offenbart die Ermittlung von unwuchterzeugenden Wellenschwingungen eines langgestreckten Rotors, bei der in einer oder mehreren Messebenen in je mindestens zwei Messrichtungen über Wegaufnehmer Komponenten der Messgrößen erfasst werden. Erforderlich sind zwei Messläufe mit Drehzahlen nahe dem Stillstand und nahe der Betriebsdrehzahl des Rotors. Einander entsprechende Messgrößenkomponenten aus beiden Messläufen werden für die Trennung der statischen und kinetischen Ausbiegungsanteile ausgewertet. Testgewichtsläufe dienen dazu, aus den sich einstellenden Ausbiegungen die Ausgleichsmassen zu ermitteln.

Nachteilig beim Stand der Technik ist, dass die Berechnung der Unwucht aufwendig ist und in der Regel Testgewichte gesetzt werden müssen.

Der Erfindung liegt die Aufgabe zugrunde, ein einfaches Verfahren zur näherungsweisen Bestimmung der modalen Unwucht eines Rotors ohne Testgewichtssetzung bereitzustellen.

Die genannte Aufgabe wird durch ein Verfahren gemäß des Anspruchs 1 gelöst. Vorteilhafte Ausgestaltungen des Verfahrens sind in den Unteransprüchen angegeben.

Die Aufgabe wird erfindungsgemäß dadurch gelöst, dass ein Verfahren zur Bestimmung einer auszugleichenden, äquivalenten modalen Unwucht für die erste Biegeeigenform eines wellenelastischen Rotors bereitgestellt wird, gekennzeichnet durch die Schritte:

Erstellen eines einfachen Rotormodells, insbesondere eines numerischen Modells, das ausschließlich die geometrische Gestalt und die Materialeigenschaften des wellenelastischen Rotors beschreibt;
Berechnen der Größe der statischen Nachgiebigkeit des Modells des Rotors an mindestens einer Messstelle und an dem Rotorschwerpunkt bei mindestens einer angenommenen Drehzahl;
Aufnehmen des wellenelastischen Rotors in einer drehbaren Lagerung und Beschleunigen des Rotors auf die angenommene Drehzahl, die unterhalb seiner ersten kritischen Drehzahl liegt;
Messen der Größe der Ausbiegung an der Messstelle des mit der angenommenen Drehzahl drehenden wellenelastischen Rotors;
Berechnen der auszugleichenden äquivalenten modalen Unwucht für die erste Biegeeigenform des wellenelastischen Rotors aus den Größen der berechneten Nachgiebigkeit und der gemessenen Ausbiegung, wobei rotordynamische Effekte unberücksichtigt bleiben.

Die Rotorausbiegung wird durch Fliehkräfte erzeugt, diese entstehen unter Rotation durch die axialverteilten Unwuchten im Rotorinneren. Die Größe der Ausbiegungen ist direkt von der Geometrie und den Materialeigenschaften des Rotors sowie der Verteilung der Unwucht abhängig. Die statische Nachgiebigkeit des Rotors an mindestens einer Messstelle und an dem Rotorschwerpunkt kann mittels bekannter mathematischer Verfahren berechnet werden. Beispielsweise kann die Nachgiebigkeit mithilfe eines analytischen oder numerischen Rechenverfahrens (FEM) mit statischem Ansatz, d.h. ohne Berücksichtigung der Rotordynamik berechnet werden.

Dagegen wird die Ausbiegung an der mindestens einen Messstelle des mit der angenommenen Drehzahl drehenden wellenelastischen Rotors gemessen. Es kann vorteilhaft sein, die Ausbiegung an mehreren Messstellen zu messen. Aus diesen Daten, das heißt aus der Nachgiebigkeit und der gemessenen Ausbiegung kann die auszugleichende äquivalente modale Unwucht für die erste Biegeeigenform des wellenelastischen Rotors errechnet werden. Das Verfahren stellt also eine einfache und kostengünstige Methode dar, die Unwucht an einem wellenelastischen Rotor zu berechnen. Sind Rotorgeometrie, Materialeigenschaften und Ausbiegung bei mindestens einer Drehzahl bekannt, kann die zugehörige, die Biegung erzeugende, äquivalente Rotorunwucht errechnet werden. Die errechnete Unwucht kann nachfolgend an mindestens einer Stelle ausgeglichen werden. Der Vorteil der Erfindung ist, dass ein Näherungsverfahren bereitgestellt wird, das lediglich ein einfaches Rotormodell ohne Berücksichtigung rotordynamischer Effekte voraussetzt und auf statischer Ausbiegung des Rotors infolge der angesetzten Unwucht basiert.

Um auch komplexere Geometrien zu erfassen, kann das Rotormodell in einer bevorzugten Ausgestaltung nach der Finite-Elemente-Methode erfolgen. Das Verfahren kann hierdurch auch auf komplexere Rotoren angewendet werden.

Es ist bevorzugt, dass das Messen der vektoriellen Größe der Ausbiegung des wellenelastischen Rotors mittels eines berührungslos arbeitenden Wegaufnehmers erfolgt, der eine Stelle am Außenumfang des Rotors erfasst.

Es kann vorteilhaft sein, dass eine Lagerung des wellenelastischen Rotors bei der Erstellung des Rotormodells berücksichtigt wird. Hierdurch wird die Berechnung der Unwucht noch exakter. Die Lagerung kann jedoch auch für das Rotormodell in vertikaler Richtung als unendlich steif angenommen werden, so dass es für die Berechnung im Wesentlichen keine Rolle spielt.

Ferner kann vorgesehen sein, dass eine Kompensation eines Rundlauffehlers des Rotors an der Messstelle erfolgt. Hierfür kann beispielsweise eine Messung bei einer geringen Drehzahl nahe 0 vorgenommen werden, sodass der Rundlauffehler dominiert und noch keine Ausbiegung auftritt.

In einer bevorzugten Ausgestaltung ist vorgesehen, dass der Rotor auf eine Drehzahl beschleunigt wird, die maximal 50 % seiner ersten kritischen Drehzahl entspricht. Es hat sich herausgestellt, dass das erfindungsgemäße Verfahren bis zu einer Drehzahl, die bei circa 50 % der ersten kritischen Drehzahl des Rotors liegt, besonders effizient ist und nur eine geringe Verfahrensungenauigkeit von weniger als 5 % aufweist.

In einer weiteren bevorzugten Ausgestaltung ist vorgesehen, dass der Rotor auf eine Drehzahl beschleunigt wird, die maximal 30 % seiner ersten kritischen Drehzahl entspricht. Das bevorzugte Verfahren ist bei einer solchen Drehzahl sehr genau. Es kann somit durch ein einfaches und schnelles Verfahren, welches einen geringen Aufwand erfordert, die Unwucht wellenelastischer Rotoren ermittelt werden.

Die Erfindung wird nachfolgend anhand von Ausführungsbeispielen der Erfindung näher erläutert, die in der Zeichnung dargestellt sind. Es zeigen

Figur 1      einen auszugleichenden Rotor und

Figur 2 einen Vergleich verschiedener Näherungsmethoden zur Berechnung einer Ausbiegung eines Rotors.

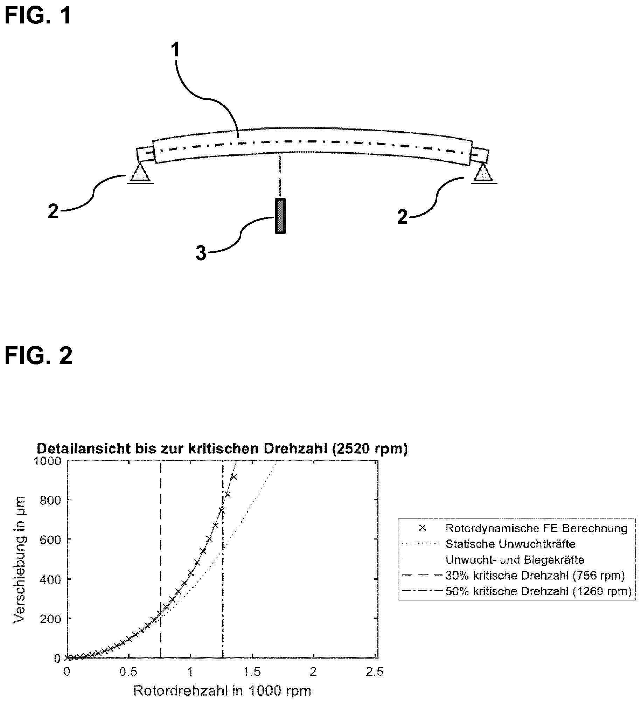

Figur 1 zeigt einen auszugleichenden Rotor. Ein wellenelastischer Rotor 1 ist in Lagern 2 drehbar gelagert. Der Rotor 1 weist eine auszugleichende Unwucht auf. Der Rotor 1 wird mithilfe eines entsprechenden Antriebs auf eine zuvor definierte Drehzahl beschleunigt, die vorzugsweise unterhalb der ersten kritischen Drehzahl des Rotors 1 liegt.

Eine Ausbiegung des Rotors 1 wird bei der Drehzahl an mindestens einer Stelle gemessen. Das Messen der vektoriellen Größe der Ausbiegung des wellenelastischen Rotors 1 kann mittels eines berührungslos arbeitenden Wegaufnehmers 3 erfolgen, der eine Stelle am Außenumfang des Rotors 1 erfasst. Der Wegaufnehmer 3 erfasst eine radiale Auslenkung des Rotors 1 an der Messstelle. Beispiele für Wegaufnehmer 3 sind kapazitive oder induktive Wegaufnehmer (Wirbelstromsensoren) oder Lasertriangulationssensoren. Die Messdaten des Wegaufnehmers 3 können an eine Auswerteeinheit weitergeleitet werden.

Außerdem wird ein Rotormodell gebildet. Dieses kann ebenfalls von der Auswerteeinheit errechnet werden. Hierbei handelt es sich um ein einfaches numerisches Modell, zum Beispiel für ein offenes Rohr oder eine Vollwelle, das rotordynamische Effekte unberücksichtigt lässt. Es können jedoch auch komplexere Geometrien, wie zum Beispiel ein Rotor mit Endscheiben und Zapfen verwendet werden. Von dem Rotor 1 werden Materialeigenschaften, wie zum Beispiel E-Modul und Dichte, und Geometriedaten, wie zum Beispiel Länge, Wandstärke und/oder Durchmesser erfasst.

Falls der Rotor 1 eine komplexe Geometrie aufweist, kann das Rotormodell beispielsweise nach der Finite-Elemente-Methode erstellt werden. Es können jedoch auch sonstige numerische Verfahren verwendet werden.

Es hat sich gezeigt, dass aus der gemessenen Ausbiegung (Größe und Lage) mithilfe des Rotormodells die Größe der die Ausbiegung erzeugenden Kraft berechnet werden kann. Diese Kraft besteht bei einer Betrachtung unter Vernachlässigung der rotordynamischen Effekte aus zwei Komponenten, wobei die Betrachtung insbesondere bis zu einer Drehzahl von circa 50% der ersten kritischen Drehzahl besonders vorteilhaft ist. Die erste Komponente entspricht der Kraft infolge der axial im Rotor 1 verteilten Unwuchten bei der gewählten Messdrehzahl. Die zweite Komponente entspricht der Kraft infolge zusätzlicher durch Massenverlagerung (Ausbiegung) entstandener Unwuchten bei der Messdrehzahl. Da die zweite Komponente durch die erste Komponente hervorgerufen wird, ist es ausreichend die erste Komponente zu eliminieren um die Gesamtkraft zu eliminieren. Mithilfe des Verfahrens ist es rechnerisch möglich, unter Verwendung des Rotormodells sowie des Messwertes der Ausbiegung bei einer bestimmten Drehzahl die erste Komponente zu ermitteln.

Die nötige Kraft für die Ausbiegung eines Rotors 1 bei einer Drehzahl im elastischen Bereich lässt sich bei einer statischen Betrachtung unter Vernachlässigung der rotordynamischen Effekte (insbesondere bis 50% der ersten kritischen Drehzahl) näherungsweise als Funktion von zwei Kraftkomponenten darstellen.

$$F = U_U * \Omega^2 + U_B * \Omega^2$$

Uu ist dabei die (verteilte) Urunwucht des Rotors 1. $U_B$ ist die Unwuchtkomponente, die infolge der Ausbiegung und der damit einhergehenden Massenverlagerung, entsteht. Diese lässt sich mit der Rotormasse mw und der Ausbiegung des Schwerpunktes xs bzw. der Nachgiebigkeit des Schwerpunktes hs und der Ausbiegungskraft F darstellen.

$$U_B = m_W * x_S = m_W * F * h_S$$

Die Gesamtkraft lässt sich aus der Nachgiebigkeit hw des Rotors an der Messstelle (aus dem Rotormodell berechnet) und der mithilfe des Wegaufnehmers 3 gemessenen Ausbiegung xw des Rotors 1 folgendermaßen ausdrücken:

$$F = x_W / h_W$$

Das heißt, die gesuchte Größe Uu lässt sich demnach durch folgende Größen darstellen:

$$U_U = (1 - h_S * m_W * \Omega^2) * \frac{x_W}{h_W} * \frac{1}{\Omega^2}$$

Durch Messung von Ausbiegung xw durch den Wegaufnehmer 3 bei der bekannten Drehzahl 12 und Eingabe der Rotorparameter (Geometrie, Materialeigenschaften) in ein Rotormodell und anschließender Berechnung der Nachgiebigkeiten des Rotors 1 an der Messstelle hw sowie der Nachgiebigkeit des Rotorschwerpunktes hs kann eine der verteilten Unwucht äquivalent wirkende Unwucht errechnet werden, die ursächlich für die Ausbiegung des Rotors ist. Das Verfahren zur Bestimmung dieser äquivalenten Unwucht für die erste Biegeeigenform eines wellenelastischen Rotors 1 gliedert sich in einer Ausgestaltung in einfache Schritte wie beispielsweise: Erstellen des Rotormodells inklusive Lagerung (analytisch für einfache Geometrien bzw. als FE-Modell für komplexere Geometrien); Berechnung der Nachgiebigkeiten des Rotors 1 an der Messstelle sowie der Nachgiebigkeit des Schwerpunktes; Messung der Ausbiegung des Rotors bei mindestens einer Drehdrehzahl (ggf. ist hierzu eine Kompensation des Rundlauffehlers der Welle an der Messstelle nötig); Berechnung der äquivalenten Unwucht, die eine solche Rotorausbiegung erzeugt, beispielsweise anhand oben beschriebener Gleichung. Die errechnete Unwucht kann an mindestens einer Stelle des Rotors 1 durch Setzung eines Ausgleichsgewichtes zur Reduzierung der Ausbiegung ausgeglichen werden.

Figur 2 zeigt einen Vergleich verschiedener Näherungsmethoden zur Berechnung einer Ausbiegung eines Rotors. Es wurden verschiedene Näherungsmethoden zur Berechnung einer Ausbiegung eines Rotors verglichen, nämlich ein einfaches statisches Modell (nur unter Berücksichtigung der Unwucht ohne jeglichen Einfluss der unwuchtverursachten Ausbiegung), eine Ausgestaltung des erfindungsgemäßen Verfahrens und einer komplexen rotordynamischen Berechnung. Hierfür wurde an dem Rotor künstlich eine Unwucht generiert und die Ausbiegung bei verschiedenen Drehzahlen mit den genannten Näherungsmethoden errechnet. Es zeigt sich, dass das Näherungsverfahren mit ausschließlicher Berücksichtigung der Unwuchtkräfte bereits ab ca. 20% der kritischen Drehzahl um mehr als 10% von der rotordynamischen komplexen Berechnung abweicht. Das bevorzugte Verfahren mit Berücksichtigung der Massenverlagerung aufgrund Ausbiegung (iterativ berechnet) weicht in dem gerechneten Beispiel auch bei 50% der kritischen Drehzahl noch weniger als 5% von der rotordynamischen Berechnung ab. Dies zeigt, dass die Messung der Ausbiegung einen Aufschluss über die am Rotor auftretende Unwucht geben kann.

**Patentansprüche**

1. Verfahren zur Bestimmung einer auszugleichenden, äquivalenten modalen Unwucht für die erste Biegeeigenform eines wellenelastischen Rotors (1), **gekennzeichnet durch** die Schritte:

   Erstellen eines einfachen Rotormodells, das ausschließlich die geometrische Gestalt und die Materialeigenschaften des wellenelastischen Rotors (1) beschreibt;
   Berechnen der Größe der statischen Nachgiebigkeit des Modells des Rotors (1) an mindestens einer Messstelle und an dem Rotorschwerpunkt bei mindestens einer angenommenen Drehzahl;
   Aufnehmen des wellenelastischen Rotors (1) in einer drehbaren Lagerung (2) und Beschleunigen des Rotors (1) auf die angenommene Drehzahl, die unterhalb seiner ersten kritischen Drehzahl liegt;
   Messen der Größe der Ausbiegung an der Messstelle des mit der angenommenen Drehzahl drehenden wellenelastischen Rotors (1);
   Berechnen der auszugleichenden äquivalenten modalen Unwucht für die erste Biegeeigenform des wellenelastischen Rotors (1) aus den Größen der berechneten Nachgiebigkeit und der gemessenen Ausbiegung, wobei rotordynamische Effekte unberücksichtigt bleiben.

2. Verfahren nach Anspruch 1, **dadurch gekennzeichnet, dass** das Erstellen des Rotormodells nach der Finite-Elemente-Methode erfolgt.

3. Verfahren nach einem der Ansprüche 1 oder 2, **dadurch gekennzeichnet, dass** das Messen der vektoriellen Größe der Ausbiegung des wellenelastischen Rotors mittels eines berührungslos arbeitenden Wegaufnehmers (3) erfolgt, der eine Stelle am Außenumfang des Rotors (1) erfasst.

4. Verfahren nach einem der vorhergehenden Ansprüche, **dadurch gekennzeichnet, dass** eine Lagerung (2) des wellenelastischen Rotors (1) bei der Erstellung des Rotormodells berücksichtigt wird.

5. Verfahren nach einem der vorhergehenden Ansprüche, **dadurch gekennzeichnet, dass** eine Kompensation eines Rundlauffehlers des Rotors (1) an der Messstelle erfolgt.

6. Verfahren nach einem der vorhergehenden Ansprüche, **dadurch gekennzeichnet, dass** der Rotor (1) auf eine Drehzahl beschleunigt wird, die maximal 50 % seiner ersten kritischen Drehzahl entspricht.

7. Verfahren nach einem der Ansprüche 1 bis 5, **dadurch gekennzeichnet, dass** der Rotor (1) auf eine Drehzahl beschleunigt wird, die maximal 30 % seiner ersten kritischen Drehzahl entspricht.

**Claims**

1. Method for determining an equivalent modal unbalance for the first bending eigenform of a shaft-elastic rotor (1), which unbalance is to be compensated for, **characterised by** the steps of:

   creating a simple rotor model which exclusively describes the geometric shape and the material properties of the shaft-elastic rotor (1);
   calculating the magnitude of the static compliance of the model of the rotor (1) at at least one point of measurement and at the centre of gravity of the rotor at at least one assumed speed;
   receiving the shaft-elastic rotor (1) in a rotatable bearing (2) and accelerating the rotor (1) to the assumed speed which is below the first critical speed thereof;
   measuring the magnitude of the outward deflection at the point of measurement of the shaft-elastic rotor (1) rotating at the assumed speed;
   calculating the equivalent modal unbalance for the first bending eigenform of the shaft-elastic rotor (1), which unbalance is to be compensated for, from the magnitudes of the calculated compliance and the measured outward deflection, without taking rotor-dynamic effects into account.

2. Method according to claim 1, **characterised in that** the rotor model is created according to the finite element method.

3. Method according to either claim 1 or claim 2, **characterised in that** the vector quantity of the outward deflection of the shaft-elastic rotor is measured by means of a contactless displacement transducer (3) which detects a point on the outer circumference of the rotor (1).

4. Method according to any of the preceding claims, **characterised in that** a bearing (2) of the shaft-elastic rotor (1) is taken into account when creating the rotor model.

5. Method according to any of the preceding claims, **characterised in that** a radial runout error of the rotor (1) is compensated for at the point of measurement.

6. Method according to any of the preceding claims, **characterised in that** the rotor (1) is accelerated to a speed which corresponds to a maximum of 50% of its first critical speed.

7. Method according to any of claims 1 to 5, **characterised in that** the rotor (1) is accelerated to a speed which corresponds to a maximum of 30% of its first critical speed.

**Revendications**

1. Procédé pour déterminer un balourd modal équivalent à compenser pour le premier mode de flexion d'un rotor à arbre élastique (1), **caractérisé par** les étapes suivantes :

   Création d'un modèle de rotor simple qui ne décrit que la forme géométrique et les propriétés des matériaux du rotor à arbre élastique (1) ;
   Calcul de l'amplitude de la flexibilité statique du modèle du rotor (1) en au moins un point de mesure et au centre de gravité du rotor à au moins une vitesse de rotation supposée ;
   Mise en place du rotor à arbre élastique (1) dans un palier rotatif (2) et accélération du rotor (1) à la vitesse de rotation supposée qui est inférieure à sa première vitesse de rotation critique ;
   Mesure de l'amplitude de la distorsion au point de mesure du rotor à arbre élastique (1) tournant à la vitesse de rotation supposée ;
   Calcul du balourd modal équivalent à compenser pour le premier mode de flexion du rotor à arbre élastique (1) à partir des amplitudes de la flexibilité calculée et de la déflexion mesurée, les effets de la dynamique du rotor étant ignorés.

2. Procédé selon la revendication 1, **caractérisé en ce que** la création du modèle de rotor est effectuée selon la méthode des éléments finis.

3. Procédé selon l'une des revendications 1 ou 2, **caractérisé en ce que** la mesure de la grandeur vectorielle de la déflexion du rotor à arbre élastique est effectuée au moyen d'un capteur de déplacement sans contact (3) qui détecte un point sur la circonférence extérieure du rotor (1).

4. Procédé selon l'une des revendications précédentes, **caractérisé en ce qu'**il est pris en compte dans la création du modèle de rotor le fait que le rotor à arbre élastique (1) est reçu dans un palier (2).

5. Procédé selon l'une des revendications précédentes, **caractérisé en ce qu'**une compensation d'un faux-rond du rotor (1) est effectuée au point de mesure.

6. Procédé selon l'une des revendications précédentes, **caractérisé en ce que** le rotor (1) est accéléré à une vitesse de rotation correspondant au maximum à 50% de sa première vitesse de rotation critique.

7. Procédé selon l'une des revendications 1 à 5, **caractérisé en ce que** le rotor (1) est accéléré à une vitesse de rotation correspondant au maximum à 30 % de sa première vitesse de rotation critique.

# FIG. 1

# FIG. 2

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- DE 102010063812 A1
- US 5724271 A
- DE 4019721 A1
- DE 2407705
- DE 3044440 C2

### In der Beschreibung aufgeführte Nicht-Patentliteratur

- **VON W. KELLENBERGER.** *Elastisches Wuchten,* 1987, 317-325